# EUROPEAN PATENT APPLICATION

(11) **EP 2 166 765 A1**
(43) Date of publication of application: **24.03.2010**
(21) Application number: 08290875.7
(22) Date of filing: 17.09.2008
(51) Int. Cl.: H04N 7/173

(54) **Device for IP tv channel selection**

(71) Applicant: Alcatel Lucent, 75008 Paris (FR)
(72) Inventor: Verzijp, Nico, 2018 Antwerpen (BE); Huysegems, Rafael, 2800 Walem (BE); Six, Erwin Alfons Constant, 9270 Kalken (BE); Hoet, Jeroen, 2500 Lier (BE)
(74) Representative: BiiP cvba

(57) **Abstract**

The present invention is related to a device for channel selection in an IPTV system containing an IPTV server and a plurality of IPTV clients. The device comprises means for receiving a channel change request, storage means for storing meta-information on a plurality of channels and a selection engine arranged for outputting a channel change command corresponding to a selected channel. The device is **characterised in that** the selection engine is arranged for selecting a channel from the plurality of channels based on the meta-information in combination with at least one selection criterion related to a group of users using different IPTV clients of the IPTV system.

## Description

### Field of the Invention

The present invention generally relates to the field of Internet Protocol (IP) Television and more in particular to a device for channel selection in an IP television system.

### Background of the Invention

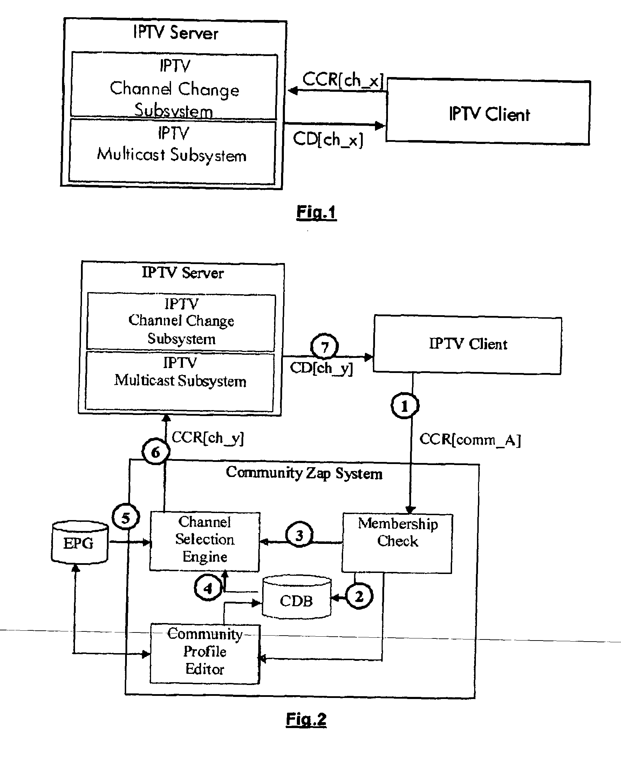

Devices for channel selection are well known in the art from current Internet protocol television systems, further referred to as IPTV systems, wherein a user is able to manually select a channel from a plurality of IPTV channels. The classical IPTV solution is shown in Fig.1. The IPTV server infrastructure is basically composed of a Channel Change part and a Multicast part. Both parts can be collocated or not. The IPTV client issues a Channel Change Request (CCR) for channel x and receives the Channel Data (CD) a short time later. Typically the first Channel Data packets come form the Channel Change Subsystem and the user is switched to the Multicast stream for that channel a few seconds later. The channel selection may be dealt with by just sequentially zapping through each of the channels till a channel is found with content that is interesting for the user. An analysis of the behaviour of broadcast TV viewers indicates that the average household zaps every 3 minutes and 42 seconds to find a channel with content which is interesting. This high zapping rate requires a lot of processing power for 'fast channel change' operations in the network and additional bandwidth that needs to be available in the IPTV network.

An improvement of this situation can be found in the reduction of the number of zaps probably obtainable through the use of channel-mosaic that provides a quick overview by combining a number of individual channels with corresponding content into one picture. Using the mosaic, the user can decide with less zaps in comparison to the sequential zapping through the plurality of channels, which channel has his preference. However, the use of channel-mosaic still has disadvantages. A single screen of the mosaic may only contain about 25 channels which renders the solution not scalable with 200 or more IPTV channels. Moreover, its use is not widely adopted under TV-spectators because it offers only a limited added value for the user. The user must stop watching while searching for a better channel.

Hence, only a small amount of unnecessary zaps can be prevented through the provisioning of a channel mosaic. The reduction of the zapping-load on the network components is still minor.

An improvement was proposed in European patent application EP 07291510. It discloses an Internet protocol TV channel selection device wherein the number of zaps, required for finding content that is interesting for the user, is reduced significantly by using at least one user-related selection criterion (i.e. a user preference) together with the information on the various channels extracted from the electronic program guide.

However, this still is just a partial solution to the bandwidth problem. Hence, there remains a need for further improvement.

### Aims of the Invention

The present invention aims to provide a device for channel selection in an IPTV system that further improves the prior art solutions. More specifically, the invention aims to describe a solution for the zap load problem.

### Summary

The present invention relates to a device for channel selection in an IPTV system containing an IPTV server and a plurality of IPTV clients. The device comprises means for receiving a channel change request, storage means for storing meta-information on a plurality of channels and a selection engine arranged for outputting a channel change command corresponding to a selected channel. The selection engine is arranged for selecting a channel from the plurality of channels based on the meta-information in combination with at least one selection criterion related to a group of users using different IPTV clients of the IPTV system. The channel selected in this way is called a community channel. The community profile can be created by a single user or even by multiple users. Once an IPTV user has selected the community channel, the received channel data is driven by the channel selection device that effectively takes over the zap function. According to the invention the zap function can be considered to be network driven.

In a preferred embodiment the 'community channel' is selected via information on the plurality of available IPTV channels, in combination with profile data for that community. The at least one selection criterion is derived from a set of preferences of at least a part of the group of users using different IPTV clients. It may be based on the preferences of all users belonging to the group. In an alternative embodiment, it is based on preferences of users using different IPTV clients that are currently tuned to an available community channel.

Advantageously the channel selection device further comprises storage means for storing the set of preferences of said at least part of the group of users.

In a preferred embodiment the device of the invention comprises means for performing an authorisation check on the received channel change request.

Preferably the channel selection device is further arranged for obtaining the meta-information from an electronic program guide of said IPTV system. Alternatively, the meta-information is obtainable from a website.

In another preferred embodiment the device is further arranged for providing information related to the selected channel to an electronic program guide (EPG) of said IPTV system. Indeed, the selection engine knows beforehand which channels will be selected (based on the community profile). This information can be given back to the EPG. IPTV clients can then check this EPG to see what's coming on the community channel.

The invention also relates to an IPTV system comprising an IPTV server, a plurality of IPTV clients and a device for channel selection as previously described.

In another aspect the invention relates to a remote control device for use in an IPTV system containing an IPTV server and a plurality of IPTV clients. The remote control device is arranged for transmitting to a device for channel selection as above described a signal indicating that channel selection is to be based on meta-information on a plurality of channels in combination with at least one selection criterion related to a group of users using different IPTV clients of the IPTV system.

### Brie Description of the Drawings

Fig. 1 illustrates the classical IPTV configuration.

Fig. 2 illustrates an IPTV configuration containing the channel selection device as in the present invention.

### Detailed Description of Embodiment(s)

The basic scheme of an IPTV system was already shown in Fig.1. The IPTV system comprises an IPTV channel change subsystem (ICCS) that receives the channel changing signal (CCR), including a channel identification like a channel number, from the user and in response initiates the channel change within the IPTV system. The ICCS may be located at the operator premises. Additionally the IPTV system comprises a set-top box STB for provisioning the user access to the IPTV system. The set-top box STB is coupled to the television set for viewing content presented through the IPTV system and further coupled over an access network such as an ADSL access network or a cable TV network and through the public or dedicated IP network coupled to the instant channel changing subsystem ICCS.

The IPTV system further comprises an IPTV channel selection device adapted to determine a channel from a plurality of available IPTV channels, where the content of the channel meets the interest of the user currently watching television. Channel selection in an IPTV system is performed by sending a request to the ICCS and additionally subscribing to the multicast stream for that particular channel by using IGMP. As IGMP based zaps are quite slow, the ICCS is there to provide a fast zap experience. The channel selection device may be implemented within the access node of the access network such as a digital subscriber line access network coupling a set-top box of the user to the IPTV system.

The channel selection device according to the present invention is provided with a so called 'community zap' function. The IPTV user selects this function once and receives from that moment onwards the channel that fits best with a selected community profile. The channel data the IPTV user receives is driven by the channel selection device that effectively takes over the zap (channel change) function. No further input from the user is required anymore, thus effectively reducing the number of channel changes in the network.

Communities can be organized based on interest, age, geographical location, etc. An IPTV community is broader and can be more user-driven than e.g. a theme channel. Indeed, a theme channel is still composed by the content provider. An IPTV system comprising a channel selection device provided with the 'community zap' function is shown in Fig.2.

The user issues the Channel Change Request (CCR) towards the channel selection device. In fact, the user does not need to know that his request is sent to the channel selection device of this invention. This can take place in a way completely transparent to the user. This can be done through a menu on the IPTV client or even a dedicated button on the IPTV remote control. It should be noted that the user is not asking a specific channel anymore, but asks for a community driven "channel". In the example of Fig.2 the user asks for community A (1). The channel selection device may be arranged for performing an authorization and/or subscription check for that user. If the authorization is successful, the user is added to the community database (CDB) (2). The IPTV system, or more in particular the channel selection engine, selects, from that moment onwards, the channel for that user. The channel selection engine is instructed to do so (see step 3 in Fig.2).

The channel selection engine is the heart of the channel selection device. It reads community profiles from the community database CDB (4) on the one hand and gets meta-information corresponding to the various channels, i.e. information on the channels and their content, on the other hand. In a preferred embodiment this meta-information is the channel programming from the electronic program guide (EPG) (5). Based on these inputs, the channel selection engine has all information available to instruct the IPTV server for channel changes (6). As such, the system can instruct the IPTV server on channel changes on behalf of the community member. This will not be an IGMP based (i.e. according to Internet Group Management Protocol, which is the multicast subscription protocol) channel request, but can be optimized for better performance. Indeed, the community zap system is not the one that wants or needs to receive the channel multicast. The channel data (see step 7) the user gets is not continuously tuned to a certain channel, but changes over time, as dictated by the 'community zap' system.

Each community has its own profile. A profile comprises a set of rules (called profile rules). A community profile rule can be very strict (e.g. : at 7PM, show the news on channel X), which makes the channel selection engine straightforward. However, a profile rule can be much more general and broad (e.g. : between 7AM and 8AM show cartoons), which drives the channel selection engine to search the EPG for the best match to the rule.

Community profiles (contained within the community database) can be created and maintained through the Community Profile Editor. Either all users of a certain community or only a limited number of community users can use this function. A distinction can be made between community administrators and community watchers.

The 'community zap' channel selection device removes a certain user from its database (and as a consequence stops instructing the IPTV server with channel changes on behalf of that user) at the moment the users gives up his/her interest in the community channel. This can be done implicitly when the user selects another community driven channel or switches manually to a dedicated channel.

The channel selection device which acts as a 'community zap' system as explained, can be implemented as a separate device or it can be a part of the IPTV server system. Physically, the community zap functionality could be located in the Access Node or wherever the IPTV channel change system is located. It is clear that the channel selection device and the IPTV channel change system should be located close to each other in order to obtain the most gain.

The solution of the invention can reduce the high load on the Instant Channel Change system and the IGMP system. On top, this solution provides a higher level of comfort for the user, as the time required to scan a large number of channels is significantly reduced. Also, interaction is possible. Communities can tune their profile. The additional user-comfort facilitates a quick adoption by the users, leading to a high load-reduction.

The invention offers an alternative way to reduce zaps. It may be an option to combine it with the solution proposed in European patent application EP07291510 or to offer both of them in parallel.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Device for channel selection in an IPTV system containing an IPTV server and a plurality of IPTV clients whereby said device comprises means for receiving a channel change request, storage means for storing meta-information on a plurality of channels and a selection engine arranged for outputting a channel change command corresponding to a selected channel, **characterised in that** said selection engine is arranged for selecting a channel from said plurality of channels based on said meta-information in combination with at least one selection criterion related to a group of users using different IPTV clients of said IPTV system.

2. Device for channel selection as in claim 1, wherein said at least one selection criterion is derived from a set of preferences of at least a part of said group of users using different IPTV clients.

3. Device for channel selection as in claim 2, further comprising storage means for storing said set of preferences.

4. Device for channel selection as in any of claims 1 to 3, further comprising means for performing an authorisation check on said received channel change request.

5. Device for channel selection as in any of claims 1 to 4, further arranged for obtaining said meta-information from an electronic program guide of said IPTV system.

6. Device for channel selection as in any of claims 1 to 4, further arranged for obtaining said meta-information from a website.

7. Device for channel selection as in any of the previous claims, further arranged for providing information related to said selected channel to an electronic program guide of said IPTV system.

8. IPTV system comprising an IPTV server, a plurality of IPTV clients and a device for channel selection as in any of claims 1 to 7.

9. Remote control device for use in an IPTV system containing an IPTV server and a plurality of IPTV clients, said remote control device being arranged for transmitting to a device for channel selection as in any of claims 1 to 7 a signal indicating that channel selection is to be based on meta-information on a plurality of channels in combination with at least one selection criterion related to a group of users using different IPTV clients of said IPTV system.
